Europäisches Patentamt

European Patent Office

Office européen des brevets

(11) Publication number: **0 262 097**
**A2**

## (12) EUROPEAN PATENT APPLICATION

(21) Application number: **87830011.0**

(22) Date of filing: **16.01.87**

(51) Int. Cl.³: **B 64 F 5/00**

(30) Priority: **05.09.86 IT 2160986**

(43) Date of publication of application:
**30.03.88 Bulletin 88/13**

(84) Designated Contracting States:
**AT BE CH DE ES FR GB GR LI LU NL SE**

(71) Applicant: CECCATO & C. S.P.A.
Via Battaglia 1
I-36041 Alte Ceccato di Montecchio Maggiore
(Vicenza)(IT)

(72) Inventor: Voutchinitch, Pavle
Via della Piazza Vecchia 2
Montecchio Maggiore (Vicenzia)(IT)

(74) Representative: Rapisardi, Mariacristina, Dr. Proc.
STUDIO TECNICO LEGALE RAPISARDI Largo V Alpini 15
I-20145 Milano(IT)

(54) Automatic washing system particularly for aircraft and related parts.

(57) The invention relates to an automatic washing system particularly for aircraft and aircraft parts, and includes at least one moving equipment (2) moving along predetermined routes (13) and designed to reach the parts to be washed of an aircraft stationed in an appropriate area of the airport. The system is provided with kinematic organs (3) to wash the said aircraft parts, which organs are fed with detergent fluids via servoes (20,21,22). Also included in the system are filling stations (4) for the unit, and at least one station (5) controlling both the washing equipment and the filling stations.

Fig. 1

EP 0 262 097 A2

## AUTOMATIC WASHING SYSTEM PARTICULARLY FOR AIRCRAFT AND RELATED PARTS

This invention refers to an automatic washing system particularly for aircraft and aircraft parts.

It is a well known fact that after a predetermined number of flight hours, aircraft must of necessity, pursuant to current safety regulations, undergo a number of checks which must mandatorily be carried out on the cleaned aircraft or on throughly cleansed parts of it. At present, aircraft are manually scrubbed using pressurized water and hand-wielded brushes and the like.

Besides the sanitary aspect, aircraft are washed after a given number of flight hours also by reason of the economic aspect connected with lower fuel consumption afforded by a clean aircraft compared to that of a dirty one. Overall aircraft cleanliness also makes it possible for the maintenance people to reach and check the landing gear and hood as well as the controls of such moving parts as the flaps and slats.

At the beginning of a washing operation, the detergent liquids are sprayed using the same equipment that will later be employed to rinse the aircraft off with water, such equipment including hoses, nozzles, guns, lances and the like. These tools are normally handled and supported by specialized cleaners, who are often moved close to the parts to be washed by service bridges or platforms.

From the above it will easily be understood that the quality and results as well as the speed of the washing operation are entirely entrusted to the skill and number of people involved, who are for the most part required to be working in conditions of hardship and even of hazard.

Being completely manual, washing conditions nowadays are particularly slow and costly, and apt time-wise to condition the checking operations that must follow the cleaning operation and to delay aircraft availability.

This invention aims at eliminating the above inconveniences by suggesting an automatic washing system particularly for aircraft and aircraft parts and capable of performing the washing in an automatic manner as well as in safe and extremely fast conditions.

Within this task, an important aim of the invention is to create an automatic washing system, particularly for aircraft and aircraft parts, capable of avoiding the presence of personnel in environmentally hazardous areas.

Not the least important purpose of the invention is to set up an automatic washing system, particularly for aircraft and aircraft parts, capable of speeding up the washing of the aircraft and relieve the washing people from the conditions of hardship connected with the task.

This purpose and these tasks are attainable with an automatic washing system, particularly for aircraft and aircraft parts, characterized by the fact that it includes at least one set of movable equipment running on predetermined routes, such equipment to

include kinematic organs for washing the parts of the aircraft subject to periodical cleaning, driving means for the said kinematic organs to be supplied with detergent fluids, at least one control station for the said kinematic equipment and filling stations, the said predetermined routes being apt to reach the said parts of an aircraft stationed in a properly arranged area of the airport.

Further characteristics and advantages inherent in the invention will more clearly stand out from the description of a preferred but not limiting version of the automatic washing system particularly for aircraft and aircraft parts according to the invention depicted indicatively but not exclusively in the attached drawings, where:

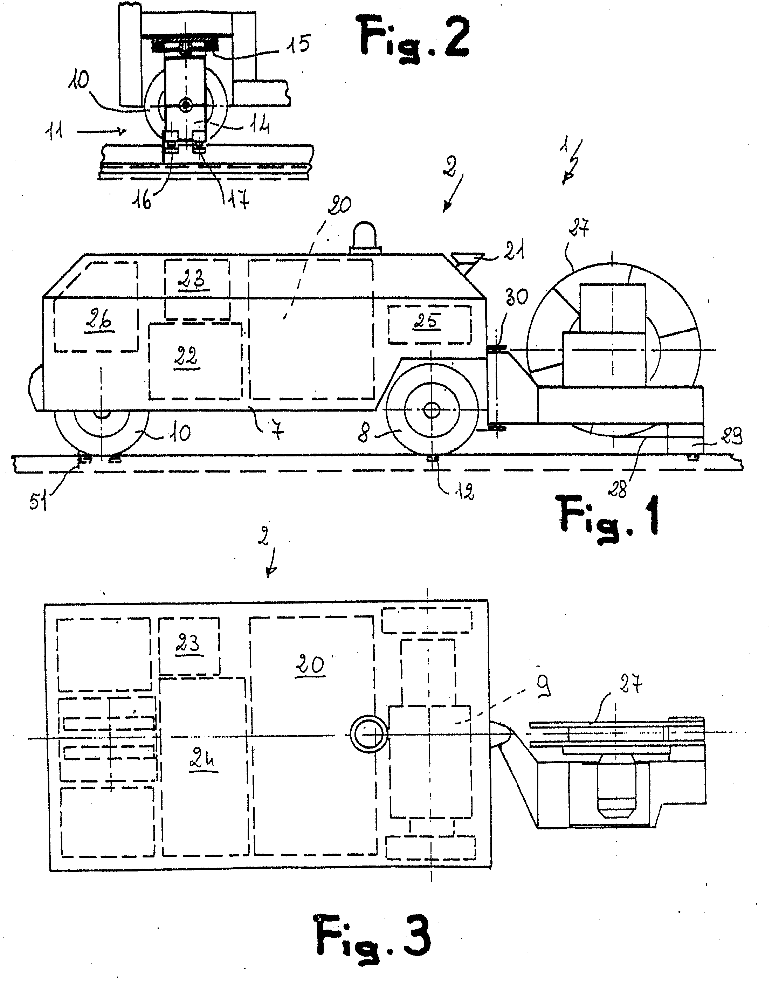

- Fig. 1 is a schematic raised side view of the the equipment moving along pre-arranged rountes pursuant to the invention;

- Fig. 2 is an enlarged raised side view of the guiding wheels present in the equipment depicted in Fig. 1;

- Fig. 3 is a plan view from above of the moving equipment shown in Fig. 1 according to the invention;

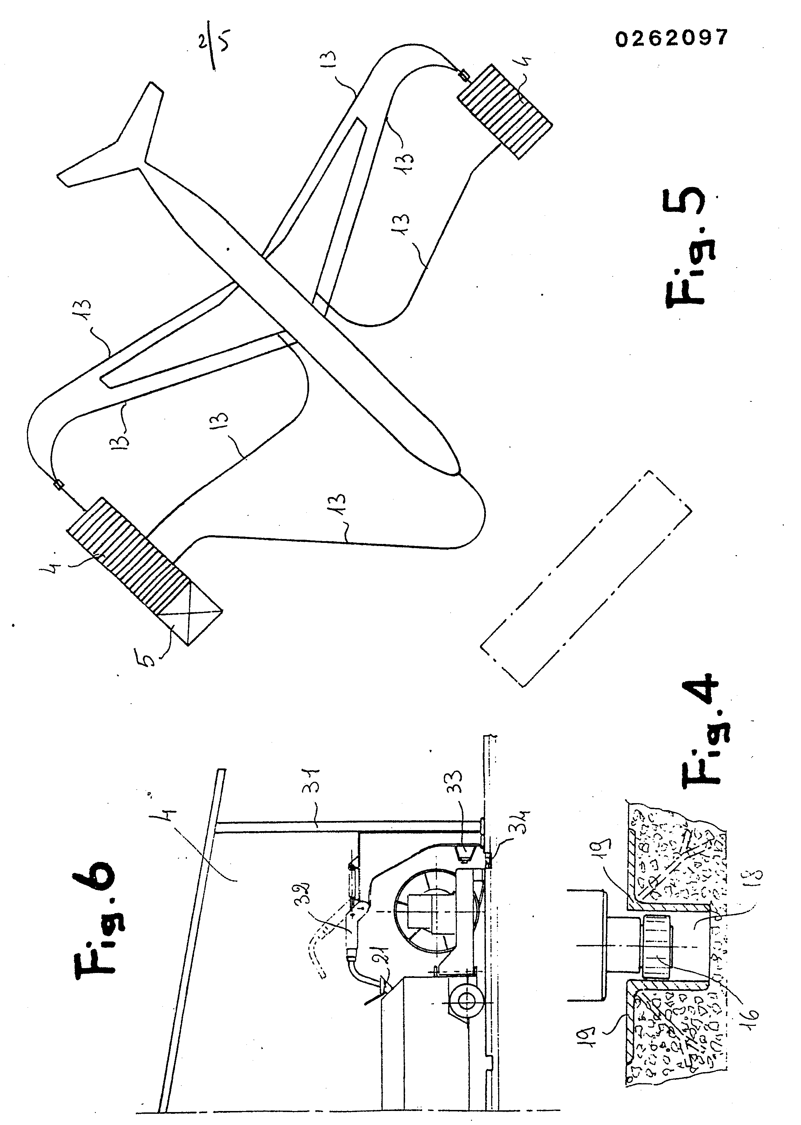

- Fig. 4 is a partial enlarged view of the section of a rail outlining a pre-arranged route along which the equipment moves according to the invention;

-Fig. 5 is a schematic plan of the pre-arranged routes apt to reach the parts of an aircraft parked in a predetermined position so that the cleaning can be performed;

- Fig. 6 shows schematically a filling station for the moving equipment pursuant to the invention;

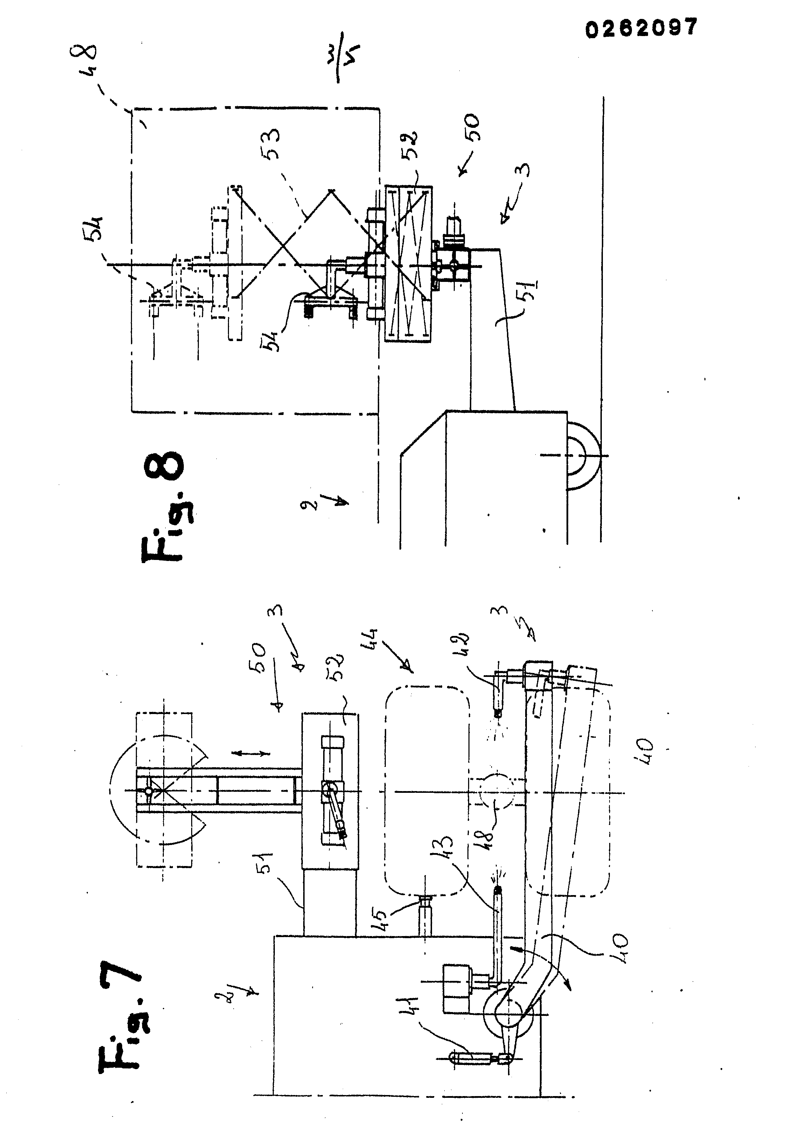

- Fig. 7 is a partial plan view from above of the kinematic organs associated with the moving equip ment apt to cleanse the main carriages of the aircraft pursuant to the invention;

- Fig. 8 is a partial/raised schematic side view of the kinematic organs apt to rinse the main carriage housing ac- cording to the invention;

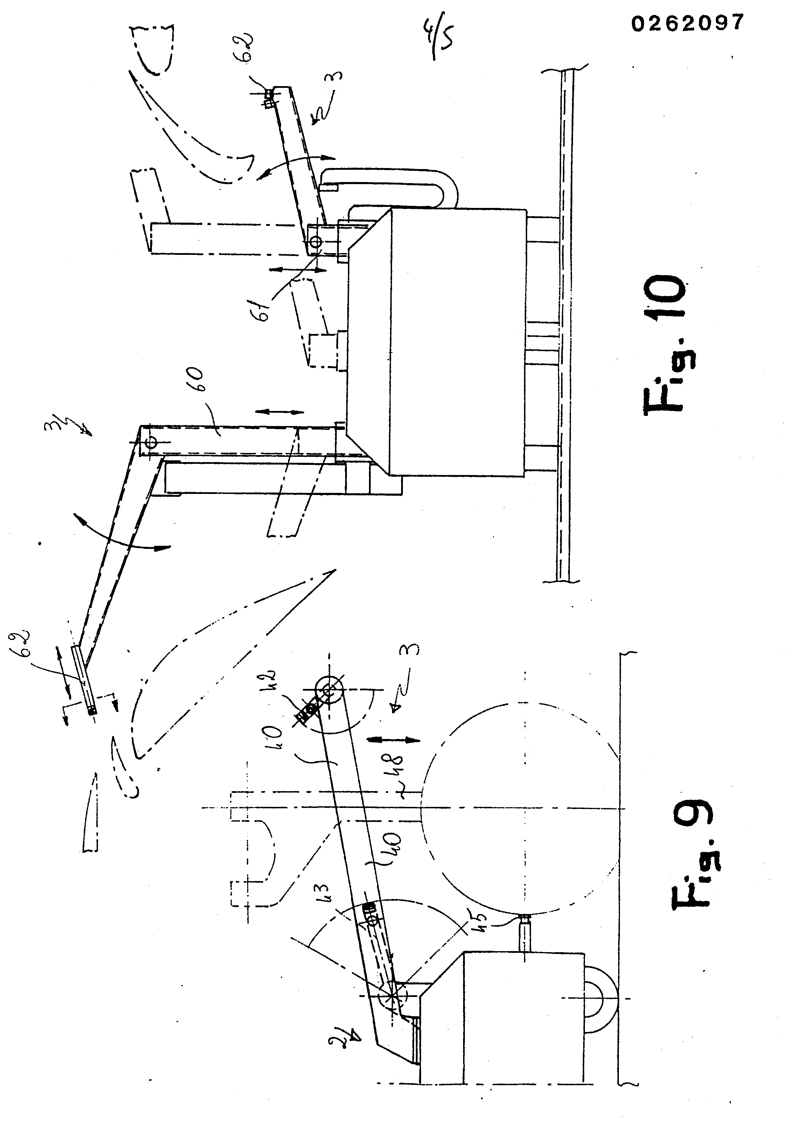

- Fig. 9 is a schematic raised partial side view of the kinematic organs shown in Fig. 7, apt to washing the carriage proper of the aircraft;

- Fig. 10 is a schematic raised front view of the kinematic organs apt to washing the aircraft wings and particularly the slats and flaps pursuant to the invention;

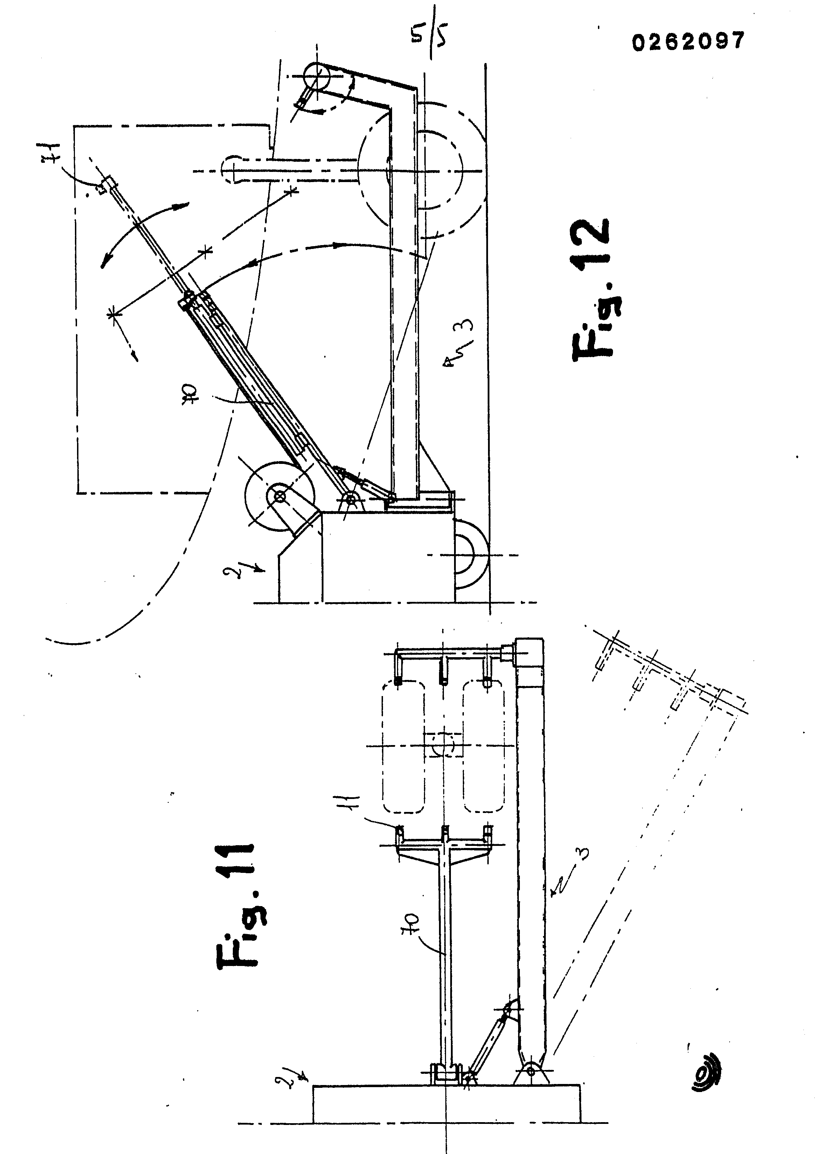

- Fig. 11 is a plan view from above of the kinematic organs designed to wash the front aircraft carriage

pursuant to the invention and

- Fig. 12 is a raised side view of the kinematic organs shown in Fig. 11 pursuant to the invention.

In reference to the figures, the automatic washing system particularly for aircraft and aircraft parts pursuant to the invention is comprehensively indicaded by reference number 1, and it includes at least one moving set of moving equipment, indicated by number 2, which includes a number of kinematic organs comprehensively indicated by 3 apt to wash the various parts of the aircraft subject to periodical cleaning.

Moving equipment 2 is also apt to support servoes and controls of kinematic organs 3 and supply these with detergents designed to be distributed over the parts of the aircraft to be washed, which detergents are supplied to the moving equipment when it is sheltered in the filling stations 4, which shall be more thoroughly detailed further ahead.

A control station 5 is also envisaged, managed by a police officer stationed in a position enabling him to oversee, using also a closed television circuit associated with the moving equipment of a commercial type not showing in the figures, the progress and results of the washing operations.

In deeper detail, the number of the moving equipment may be worked out depending on the need to simultaneously clean more than one part of the aircraft, each equipment set being equipped with a frame 7 supported by two driving wheels 8 associated with a speed-reducing motor capable of providing the moving equipment with three working speeds, two of which operative and one driving the equipment up close to the aircraft, so as to vary the washing and moving times of the equipment and make it more flexible and suitable to the purpose it was designed for. The front part of frame 7 is also supported by a swiveling castor 10, near which is at least one front guiding wheel, and more exactly two front guiding wheels generically indicated 11, whereas close to the driving wheels is a rear guiding wheel 12 which, together with the front guiding wheels, enables the moving equipment to reach, along the predetermined routes 13, the parts to be washed of the aircraft parked in the appropriate area of the runway, which parts need washing before being submitted to maintenance. The front and rear guiding wheels also show a rotating rudder associated via the pivot 15 with the moving equipment; and on the side opposite to pivot 15 are bearings 16 and 17 located parallel to the rudder axis which engage in a sliding fashion in the pre-determined rails 13, which in their illustrated executive form are represented by channels 18 whose sides are reinforced with rails 19 solidly connected to them. Appropriately, the diameter of bearings 16 and 17 of the front and rear guiding wheels respectively is smaller than the distance between the two facing rails 19.

By mere example only, we would point out that the controls supported by the moving equipment include a water tank 20, side by side to detergent tank 22, so that both tanks can be filled up at the same time from the automatic-opening filling outlets 21.

Each of the water tanks 20 and detergent tanks 22 are provided with electric pumps 23 and 24 designed to suck the water and detergent and send them under pressure to the kinematic organs in charge of projecting them against the aircraft parts to be cleaned. The moving equipment is also equipped with a data processing system, generically indicated 25, which activates a control unit 26, the task of the latter being to plan the operations of the moving equipment. The moving equipment is also provided with a motor-driven coil 27 in charge of laying link cable 28 via a laying guide 29, the cable 28 being laid on

the bottom of channels 19 and through which all commands and functions are transmitted to the moving equipment by the control station.

The motor-driven cable winder is also associated at one end with frame 7 via hinge 30 which permits it to oscillate parallel to the traveling ground of the moving equipment, whereas at the opposite end it engages in a sliding fashion in rail 19 through at least one of the said guiding wheels.

It is worthwhile mentioning that the front guiding wheel of the moving equipment is provided with a scratching palette 51, whose task it is to remove any foreign matter from channel(s) 19 constituting the prearranged routes of the moving equipment.

While at rest, each set of moving equipment is sheltered in filling stations, one wall of which houses a plurality of dispensers 32 for each moving equipment, the said dispensers designed respectively to replenish the water and detergent tanks.

Dispensers 32 can also advantageously move along an orthogonal plane to wall 31 and to the station floor, and their free ends have a curved design better to fit into supply mouthpieces 21 of the moving equipment, which also open automatically.

Close to the station floor is also envisaged a general circuit breaker 33 connecting the whole station and therefore all the apparatuses involved in the supply and control of the moving equipment.

It should also be noted that linking cable 28 is connected with the control station via marshalling box 34 housed in the station floor close to wall 31.

As mentioned above, each moving equipment set is provided with kinematic organs to wash the various parts of the aircraft, and they include swiveling arm 40 consisting of two reciprocally articulating sections, the arm hinging round an axle perpendicular to the frame of the moving equipment.

Arm 40 is driven by at least one control cylinder, or more precisely by cylinder 41, and on the free end of the arm is an initial set of detergent nozzles 42 associated with the arm in a rotary fashion so as to move along a parallel plane to the side face of the arm itself.

The moving equipment also incorporates a second set of spraying nozzles 43 associated with it in a swiveling fashion so as to be operated synchronically with spraying nozzles 42 when washing aircraft carriages generically marked 44.

On the front section of the moving equipment, the section designed to face the aircraft to be washed,

is sensor 45, designed to position the moving equipment relatively to the aircraft carriage(s).

In deeper detail, the kinematic organs include washing means generically marked 50 devoted to cleaning the housings of both main carriages 48 and of the fore-carriage of the aircraft.

The washing means devoted to cleaning the housings of the main carriages are provided with translation guide 51 and with slide 52 equipped with pantograph 53, and the guide projects from the moving equipment in a direction substantially parallel to the moving equipment and parallel to its translation ground.

On its free end opposite the end attached to the slide 52, pantograph holds a third set of dispensing nozzles 54, which advantageously rotate round a spraying axis substantially perpendicular to the ground so they fully spray the detergent liquid inside the carriage hood and cleanse it thoroughly.

Furthermore, the kinematic organs include at least one or more precisely two arms 60 and 61, which vertically extend telescope-like upward from the moving equipment substantially perpendicularly to the ground on which it runs. Each telescopic arm 60 and 61 ends with fluid dispensers 62 designed to wash the slats and flaps of the aircraft wings.

In better detail, telescopic arm 60 devoted to washing the flaps comprises at least one swiveling first section and at least one translating second section in respect of the first section provided with the fluid dispensers 62.

The washing means, and more precisely those devoted to washing the fore carriages of aircraft, include a swiveling arm 70 moving along a plane parallel to the axis of the moving equipment and to the ground on which the moving equipment runs.

The smaller arm 70 is advantageously extensible telescope-like so it can reach the interstices of the fore carriage hood, and it holds spraying nozzles 71 to wash the said fore carriage hood.

The automatic washing system pursuant to this invention operates as follows:

After the aircraft to be washed has been positioned in the area of the runway devoted to that purpose, moving equipment 2 is directed to leave filling stations 4 and reach the parts of the aircraft to be washed along the prearranged routes 13. As the moving equipment reaches the desired position the kinematic organs are activated along with the spraying nozzles in charge of washing the different parts of the aircraft. When the washing is over, the moving

equipment is moved back and sheltered again inside filling stations 4 and filled up with fresh water and detergent fluid.

It has been practically proved that the washing system pursuant to the invention fully meets the requirements, as it makes it possible automatically to wash aircraft quickly and without operators being present in hazardous areas of the runway.

Thus conceived, the invention is susceptible to numerous modifications and changes, all of which covered by the basic concept of the invention; furthermore, all the details may be replaced with technically equivalent elements; so, for instance, the prearranged routes might consist, besides mechanical tracks, also of pneumatic, optical and electromagnetic tracks affording fields of force of known type and at any rate capable ot securing control on the operative distances and averting undesired contacts to occur among the moving equipment as it is moved.

In actual practice, the materials and dimensions of the system may vary depending on the state of the art and on the requirements.

CLAIMS

1 - Automatic washing system particularly for aircraft and aircraft parts, characterized by the fact that it includes at least one set of moving equipment (2) running along prearranged routes (13), the said moving equipment including kinematic organs (3) designed to wash the parts os aircraft subject to periodical cleansing, and means (20,21,22) controlling the said kinematic organs (3) and providing them with detergent fluids, filling stations (4) for the said moving equipment, at least one station (5) controlling the said moving equipment (2) and the said filling stations (4), the said prearranged routes being apt to reach the said parts of an aircraft stationed in a prearranged area of the runway.

2 - System pursuant to claim 1, characterized by the fact that the said moving equipment comprises a frame (7) supported by at least two driving wheels associated with a speed-reducing motor (9) and at least one swiveling wheel (10), the said frame being provided with at least one front guiding wheel (11) placed close to the said swiveling wheel (10) and at least one rear guiding wheel (12) placed near the said two driving wheels (8).

3 - A system pursuant to claims 1 and 2, characterized by the fact that the said rear guiding wheels and front guiding wheels are provided with a rudder (14) pivoting and associated via a pivot (15) placed under the said moving equipment (2), at least one bearing (16, 17) developing from the said rudder and from the opposite side of the said pivot and engaging in a sliding fashion in the said prearranged routes (13).

4 - A system pursuant to claim 3, characterized by the fact that the said prearranged routes (13) comprise channels (18) whose edges are reinforced with rails (19) solidly connected to them.

5 - A system pursuant to claims 3 and 4 characterized by the fact that the diameter of the said at least one bearing (16, 17) is smaller than the distance between the said facing rails (19).

6 - A system pursuant to claim 1, characterized by the fact that the controlling means (20, 21, 22) are supported by the said moving equipment (2) and include a water tank (20) and a detergent tank (22) coupled to the said water tank, at least one electro-pump (23, 24) projecting the said water and the said detergent to the said kinematic organs, and a data processor (25) controlling a command unit (26) for a programmed operation of the said moving equipment.

7 - A system pursuant to one or more of the above claims, characterized by the fact that it includes a motor-driven cable winder (27) for the laying of link cable (28), the said cable winder being connected swivel-like at one end with the said frame (7) and at the opposite end being connected slide-wise, via at least one of the said guiding wheels (11) with the said channels.

8 - A system pursuant one or more of the above claims, characterized by the fact that the said motor-driven cable winder includes a guide (29) enabling the said cable to be laid on the bottom of the said channels, the said cable being connected with the said control station.

9 - A system pursuant to one or more of the above claims, characterized by the fact that the said speed-reducing motor affords at least two speeds, one approach speed and at least one operative speed.

10 - A system pursuant to one or more of the above claims, characterized by the fact that the said front guiding wheel (11) holds a scratching palette (51) running inside the said rails.

11 - A system pursuant to one or more of the above claims, characterized by the fact that the said filling stations comprise a wall (31) holding a plurality of dispensers (32) for the said water and the said detergent, such dispensers swiveling on a plane respectively orthogonal to the said wall and the said station floor, the said dispensers terminating with curved nubs apt to engage in the automatically opening filling mouthpieces (21) associated with the said water and detergent tanks.

12 - A system pursuant to claim 11, characterized by the fact that the said station wall includes, in a position close to the floor, a circuit breaker activating the said stations.

13 - A system pursuant to claims 1, 7 and 11 above, characterized by the fact that the said station floor includes, in a position close to the said wall, a marshalling box (34) connecting the said linking cable with the said control station.

14 - A system pursuant to one or more of the above claims, characterized by the fact that the said kinematic organs include a swiveling arm (40) hinging round an axis substantially perpendicular to the said frame, the said arm being driven by at least one control cylinder (41) and supporting on its free end a first set of fluid dispen

sers (42) attached to it swivel-wise, a second set of swiveling nozzles (43) being also envisaged associated to the said at least one set of equipment and operating together with the said fist set of nozzles in washing the carriages (44) of the said aircraft.

15 - A system pursuant to claim 14, characterized by the fact that the said arm oscillates along planes orthogonal to the ground on which the said moving equipment runs.

16 - A system pursuant to claim 14, characterized by the fact that the said kinematic organs are provided with a sensor (45) for positioning the said moving equipment relatively to the said carriages.

17 - A system pursuant to claim (14), characterized by the fact that the said kinematic organs include washing means (50) to cleanse the hoods housing the said carriages.

18 - A system pursuant to claim 17, characterized by the fact that the said washing means include a guide (51) driving a pantograph (53) equipped slide (52), the said guide developing out from the said moving equipment in a direction parallel to the equipment axis and to the ground.

19 - A system pursuant to claim 18, characterized by the fact that the said pantograph supports a third set of dispensing nozzles rotating round an axis substantially orthogonal to the said ground.

20- A system pursuant to claim 1, characterized by the fact that the said kinematic organs include at least one telescopic arm (60, 61) vertically extending from the said moving equipment (2) in a direction substantially perpendicular to the ground, the said at least one arm being associated on one side with the said equipment and carrying fluid dispensers (62).

21 - A system pursuant to claim 20, characterized by the fact that the said arm consists in/a first at least swiveling section and in at least a second section translating in respect of the first section, the said second section carrying the said fluid dispensers.

22 - A system pursuant to claim 1, characterized by the fact that the said washing means include a smaller swiveling arm (70) moving on a plane substantially parallel to the axis of the said moving equipment and perpendicular to the ground, the said smaller arm being extensible and carrying dispensing nozzles (71) to wash the fore-carriages of the said aircraft.

23 - An automatic washing system particularly for aircraft and related parts, characterized by the fact that it includes one or more of the characteristics and features described above and illustrated.

**Fig.2**

**Fig.1**

**Fig.3**

0262097

Fig. 5

Fig. 4

Fig. 6

**Fig.7**

**Fig.8**

Fig. 9

Fig. 10

62

3

60

61

62

3

40    42

43

40

48

3

45

2

4/5

0262097

0262097

Fig. 12

Fig. 11